# EUROPÄISCHE PATENTSCHRIFT

(11) **EP 1 426 209 B1**
(45) Veröffentlichungstag und Bekanntmachung des Hinweises auf die Patenterteilung: **14.06.2006**
(21) Anmeldenummer: 03025720.8
(22) Anmeldetag: 06.11.2003
(51) Int. Cl.: B60G 17/015, B60G 17/056, B60G 21/055, B60G 21/073, B60G 21/10

(54) **Hydraulisches Stabilisierungssystem**
Hydraulic anti-roll system
Système de stabilisation hydraulique

(30) Priorität: 04.12.2002 DE 10256677
(43) Veröffentlichungstag der Anmeldung: 09.06.2004
(73) Patentinhaber: Bayerische Motoren Werke Aktiengesellschaft, 80809 München (DE)
(72) Erfinder: Puschmann, Peter, 80935 München (DE); Bruns, Hartmut, 85622 Weissenfeld (DE); Kasaj, Roland, 80995 München (DE)

(56) Entgegenhaltungen:
- EP-A- 0 431 646
- US-A- 5 539 639
- US-A- 5 630 623
- US-A- 6 003 880

## Beschreibung

Die Erfindung betrifft ein hydraulisches Stabilisierungssystem für ein Fahrwerk eines Fahrzeuges nach dem Oberbegriff des Anspruchs 1. Ein solches system ist aus der gattungsgemäßen US 6 003 880 A bekannt.

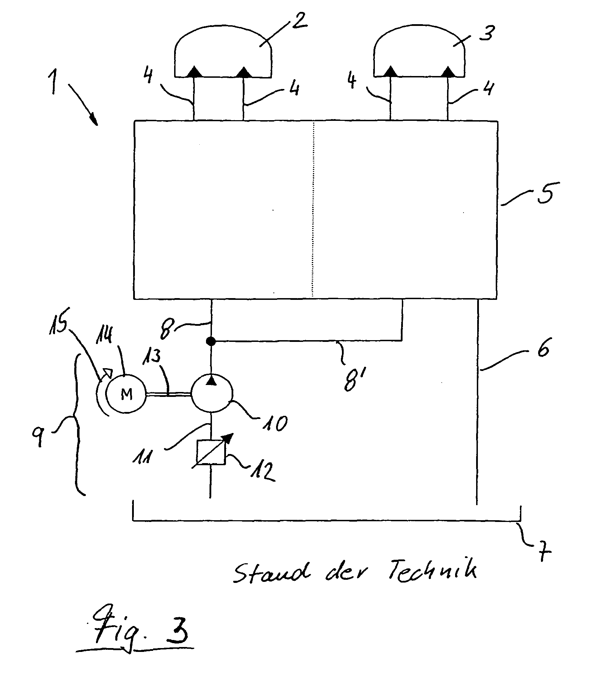

Aus dem Stand der Technik ist ein hydraulisches Stabilisierungssystem gemäß Fig.3 bekannt. Dieses hydraulische Stabilisierungssystem 1 weist einen Vorderachsaktuator 2 und einen Hinterachsaktuator 3 auf, welche mit ihren Abtriebsgliedern derart mit Fahrwerkselementen, z. B. Radaufhängungslenkern oder Stabilisatorabschnitten, verbunden sind, dass bei Betätigung der Aktuatoren 2, 3 ein Moment um die Längsachse des Fahrzeugs (Rollmoment) erzeugbar ist. Hierzu sind die Aktuatoren 2, 3 als so genannte Zweikammer-Aktuatoren ausgebildet, wobei jede der Kammern mit einem ersten Ende mit einer hydraulischen Versorgungsleitung 4 in Verbindung steht. Anderendig steht die hydraulische Versorgungsleitung 4 mit einer Richtungsventileinrichtung 5 in Verbindung. Die Richtungsventileinrichtung 5 stellt jeweils für den Vorderachsaktuator 2 und den Hinterachsaktuator 3 hydraulische Energie in der erforderlichen Höhe und der erforderlichen Orientierung, d.h. in der erforderlichen Strömungsrichtung, zur Verfügung. Weiterhin steht die Richtungsventileinrichtung 5 über eine Rücklaufleitung 6 mit einem Vorratsbehälter 7 für Hydraulikflüssigkeit in Verbindung. Je nach Betriebszustand kann über die Rücklaufleitung 6 auch Hydrauliköl, welches sich im Vorratsbehälter 7 befindet, in die Richtungsventileinrichtung 5 nachgesaugt werden.

Zur Versorgung des hydraulischen Stabilisierungssystems 1 mit hydraulischer Energie steht die Richtungsventileinrichtung 5 über Druckleitungen 8, 8' mit einer hydraulischen Energieversorgungseinrichtung 9 in Verbindung. Die Druckleitung 8 verbindet dabei die hydraulische Energieversorgungseinrichtung 9 mit dem für den Vorderachsaktuator 2 vorgesehenen Teil der Richtungsventileinrichtung 5. Die Druckleitung 8' verbindet die hydraulische Energieversorgungseinrichtung 9 mit dem für die Ansteuerung des Hinterachsaktuators 3 vorgesehenen Teil der Richtungsventileinrichtung 5.

Die hydraulische Energieversorgungseinrichtung 9 weist eine Radialkolbenpumpe 10 auf, welche ausgangsseitig mit den Druckleitungen 8, 8' in Verbindung steht. Eingangsseitig steht die Radialkolbenpumpe 10 mit einer Saugleitung 11 in Verbindung, welche anderendig mit dem Vorratsbehälter 7 verbunden ist. In der Saugleitung 11 ist eine Steuereinrichtung 12 angeordnet, welche auf der Niederdruck-, d.h. auf der Saugseite der Radialkolbenpumpe den Hydraulikfluidmassenstrom einstellen kann. Die Radialkolbenpumpe 10 ist über eine Welle 13 mit einer mechanischen Antriebseinrichtung 14 verbunden. Die mechanische Antriebseinrichtung ist gemäß dem Stand der Technik beispielsweise eine Riemenscheibe, welche vom Verbrennungsmotor des Kraftfahrzeugs über einen geeigneten Riemenantrieb unidirektional in der Pfeilrichtung 15 angetrieben wird.

Ein derartiges hydraulisches Stabilisierungssystem hat sich zwar bewährt, weist jedoch noch verschiedene Nachteile auf. Die gemäß dem Stand der Technik zum Einsatz kommenden Radialkolbenpumpen weisen druckseitig ein sehr hohes Druckniveau von bis zu 180 bar auf. Dementsprechend müssen sämtliche der Radialkolbenpumpe druckseitig nachgeschalteten Einrichtungen hinsichtlich der Festigkeit und Druckstabilität für dieses hohe Druckniveau ausgelegt werden. Dies erfordert sowohl für die Verlegung der Leitungen im Fahrzeug als auch für die konstruktive Ausgestaltung der Ventilelemente in der Richtungsventileinrichtung eine entsprechend massive und deswegen Bauraum-intensive konstruktive Ausgestaltung. Zudem genügen Radialkolbenpumpen nicht mehr den gestiegenen Anforderungen hinsichtlich des Akustikkomforts. Außerdem sind Radialkolbenpumpen in der Herstellung teuer.

Aus der US 6,003,880 A ist ein hydraulisches Fahrzeug-Stabilisierungssystem bekannt, bei dem die Hydraulik-Pumpe als elektrisch auf Druck geregelte Flügelzellenpumpe ausgebildet ist. Eine solche Flügelzellenpumpe ist zwar hinsichtlich der oben geschilderten Nachteile günstiger als eine Radialkolbenpumpe, jedoch ist der Steuerungsaufwand insbesondere aufgrund eines bei diesem Stand der Technik erforderlichen elektronisch angesteuerten Druckregelventils relativ hoch. Relativ hohe Werte annehmen kann im übrigen auch die mit diesem Stand der Technik in der Pumpe erzeugte Verlustleistung,

Aufgabe der Erfindung ist es, hier weitere Verbesserungen aufzuzeigen. Die Lösung dieser Aufgabe besteht für ein hydraulisches Stabilisierungssystem nach dem Oberbegriff des Anspruchs 1 darin, dass die Pumpe eine Druck- und/oder Volumen-regelbare Flügelpumpe ist, wozu ein Druck- und/oder Volumengeregelter Ausgang der Pumpe über eine Steuerleitung mit einer von der Pumpe versorgten Druckleitung verbunden ist.

Flügelpumpen haben den Vorteil, dass sie in den Baugrößen, welche üblicherweise in Kraftfahrzeugen eingesetzt werden, ein niedrigeres Druckniveau bieten, welches zwischen 120 und 150 bar liegt. Hieraus resultiert eine Bauraumsparende und in der konstruktiven Auslegung einfacher handzuhabende Leitungsverlegung im Fahrzeug, weil diese Leitungen auf einen verminderten Maximaldruck ausgelegt werden müssen. Dies ermöglicht z. B. dünnere Wandstärken der Leitungen und hieraus resultierend engere Biegeradien für die Leitungsverlegung. Damit das gesamte hydraulische Stabilisierungssystem das angestrebte gleiche Leistungsvermögen wie jenes nach dem Stand der Technik aufweist, muss lediglich die wirksame Arbeitskolbenfläche in den Aktuatoren entsprechend vergrößert werden. Gleichzeitig können jedoch die Wandstärken und insbesondere auch die Dichtungen der Aktuatoren auf das niedrigere Druckniveau zugeschnitten werden, wodurch in der Gesamtbetrachtung eine Gewichtseinsparung und somit eine Kostenreduzierung bei gleichzeitig höherer konstruktiver Variabilität resultiert. Zudem kann Bauart-bedingt durch den Einsatz einer Flügelpumpe die Steuerung in der Saugleitung für die Flügelpumpe entfallen, da diese aufgrund der Pumpencharakteristik einer Hydraulikpumpe in Flügelbauweise nicht mehr erforderlich ist. Vielmehr ist es möglich, die Flügelpumpe als regelbare Pumpe mit einem druckvariablen Ausgang und/oder einem druckseitigen Ausgang, an welchem Maximaldruck anliegen kann, auszubilden, mit einer einfach umsetzbaren Druckregelung oder Volumenregelung in der Form, dass ein Druck- und/oder Volumengeregelter Ausgang der Pumpe über eine Steuerleitung mit einer von der Pumpe versorgten Druckleitung verbunden ist. Dies stellt dann eine sog. hydromechanisch geregelte Pumpe dar. Ein besonderer Vorteil von Flügelpumpen liegt in deren geringen Förderstrompulsationen, so dass diese eine geringe Geräuschentwicklung im Fahrzeug verursachen. Zudem zeichnen sich Flügelpumpen durch ein besonders niedriges Leistungsgewicht von etwa 0,4 bis 0,6 kg pro Kilowatt und hohe zulässige Drehzahlen aus. Zu den Flügelpumpen zählt insbesondere die Bauart der Flügelzellenpumpe, bei der die die Verdrängerzellen abteilenden Flügel im Rotor verschiebbar gelagert sind.

Im Folgenden wird die Erfindung anhand der Zeichnung beispielhaft näher erläutert. Es zeigt
Fig.1 eine erste Ausführungsform eines hydraulischen Stabilisierungssystems mit einer erfindungsgemäßen hydraulischen Energieversorgungseinrichtung,
Fig.2 Ergänzungen zur Ausführungsform nach Figur 1, sowie
Fig.3 ein hydraulisches Stabilisierungssystem gemäß dem eingangs geschilderten Stand der Technik.

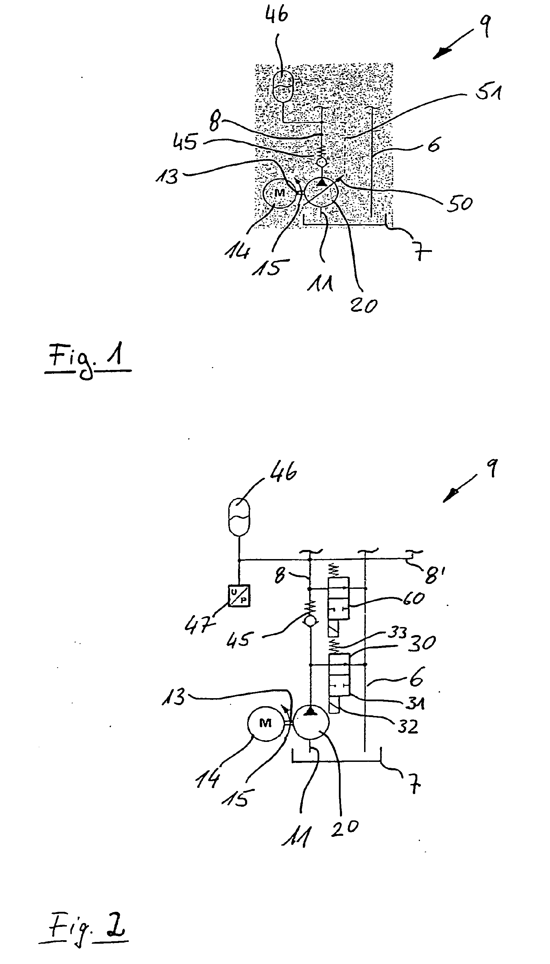

Ein erfindungsgemäßes hydraulisches Stabilisierungssystems weist eine hydraulische Energieversorgungseinrichtung 9 gemäß Fig. 1 auf. Die hydraulische Energieversorgungseinrichtung 9 weist eine Pumpe 20 auf, welche als regelbare Flügelzellenpumpe ausgebildet ist. Hierzu ist ein Druck- und/oder Volumengeregelter Ausgang 50 der Pumpe 20 über eine Steuerleitung 51 mit einer von der Pumpe 20 versorgten und zu einer Richtungsventileinrichtung (in Fig.1 nicht gezeigt; vgl. hierzu den eingangs erläuterten Stand der Technik nach Fig.3) führenden Druckleitung 8 - in einem Abschnitt stromab eines Kugelrückschlagventils 45 - verbunden. Analog dem bekannten Stand der Technik (vgl. Fig.3) ist im übrigen die Pumpe 20 über eine Welle 13 mit einer mechanischen Antriebseinrichtung 14 verbunden und über die mechanische Antriebseinrichtung 14 in Pfeilrichtung 15 antreibbar. Ansaugseitig ist die Pumpe 20 über eine Saugleitung 11 mit einem Vorratsbehälter 7 für Hydraulikfluid verbunden. In Förderrichtung der Pumpe 20 sitzt in der Druckleitung 8 ein Kugelrückschlagventil 45. In Strömungsrichtung hinter dem Kugelrückschlagventil 45 ist die Druckleitung 8 zum einen mit der Richtungsventileinrichtung (nicht gezeigt) und zum anderen (fakultativ) mit einem Druck- und/oder Volumenspeicherelement 46 und ggf. einem Differenzdrucksensor 47 (dieser ist nur in Fig.2 dargestellt) verbunden.

In Form dieses Druck- und/oder Volumenspeicherelements 46 weist diese Energieversorgungseinrichtung 9 eine so genannte Speicher-Lade-Einheit auf, wobei die Versorgung der bereits mehrfach genannten Richtungsventileinrichtung zunächst aus dem Druck- und/oder Volumenspeicherelement 46 erfolgt. Erst wenn der Versorgungsdruck aus dem Druck- und/oder Volumenspeicherelement 46 ein gewisses Mindestmaß unterschreitet, welches über einen Drucksensor (vgl. Fig.2, Bezugsziffer 47) detektiert wird, fördert die Pumpe 20 über die Druckleitung 8 gegen den Widerstand des Kugelrückschlagventils 45 Hydraulikfluid in die Richtungsventileinrichtung und in das Druck- und/oder Volumenspeicherelement 46.

Eine weitere Ausführungsform des hydraulischen Stabilisierungssystems weist eine hydraulische Energieversorgungseinrichtung 9 gemäß Fig.2 auf. Dabei ist dem Kugelrückschlagventil 45 in der Druckleitung 8 nachgeordnet parallel zu einem Bypass-Ventil 30 ein Sicherheitsventil 60 in 2/2-Bauform angeordnet. Das Sicherheitsventil 60 ermöglicht in der in Fig.2 gezeigten Schaltstellung einen Druckabbau in den Druckleitungen 8, 8', in dem Druck- und/oder Volumenspeicherelement 46 und der nachgeschalteten Richtungsventileinrichtung (nicht gezeigt) sowie den Aktuatoren (nicht gezeigt). Ein Druckabbau in den genannten Druck-führenden Elementen kann z.B. bei einer auftretenden Störung erforderlich werden, bei der es notwendig ist, die aktive Beeinflussung des Fahrverhaltens durch das hydraulische Stabilisierungssystem zu unterbinden. Insofern handelt es sich bei dem Sicherheitsventil 60 um eine so genannte Fail-Save-Einrichtung.

Ferner zeigt diese Ausführungsform ein zwischen der Pumpe 20 und der (nicht gezeigten) Richtungsventileinrichtung angeordnetes Bypass-Schaltventil 30, welches als 2/2-Schaltventil ausgebildet ist, d.h. über zwei Anschlüsse und zwei Schaltstellungen verfügt. Das Bypass-Schaltventil 30 weist einen Schieber 31 auf, welcher über einen Elektromagneten 32 gegen den Federdruck einer gegenüberliegenden Feder 33 in der in der Figur dargestellten, ersten Schaltstellung gehalten wird. Wird der Magnet 32 beabsichtigt oder z.B. durch einen Stromausfall im Fahrzeug unbeabsichtigt stromlos geschaltet, so wird der Schieber 31 durch den Federdruck der Feder 33 in die zweite Schaltstellung verschoben. In der ersten in der Figur dargestellten Schaltstellung steht die Druckausgangsseite der Pumpe 20 mit der Rücklaufleitung 6 in Verbindung, so dass die Pumpe 20 im Nulllastbetrieb das Hydraulikfluid nahezu verlustleistungsfrei aus dem Vorratsbehälter 7 ansaugen und über die Rücklaufleitung 6 zurückleiten kann. Unterschreitet hingegen der Versorgungsdruck aus dem Druck- und/oder Volumenspeicherelement 46 ein gewisses Mindestmaß, welches über den Drucksensor 47 detektiert wird, fördert die Pumpe 20 über die Druckleitung 8 gegen den Widerstand des Kugelrückschlagventils 45 Hydraulikfluid in die Richtungsventileinrichtung und in das Druck- und/oder Volumenspeicherelement 46, wozu das Bypass-Schaltventil 30 in die zweite, nicht gezeigte Schaltstellung gebracht wird, sodass eine Leerlaufumwälzung des Hydraulikfluids durch die Pumpe 20 unterbunden ist.

Abweichend von den soweit geschilderten Ausführungsformen ist auch eine Ausführungsform als hydraulisch geschlossenes System möglich, welches ohne Vorratsbehälter auskommt. Die Pumpe kann hierbei als so genannte bidirektionale regelbare Tandem-Flügelpumpe ausgebildet sein. Bidirektional bedeutet in diesem Zusammenhang, dass trotz eines unidirektionalen Antriebs durch die mechanische Antriebseinheit die Pumpe Hydraulikfluid in zwei Richtungen fördern kann. Jeder Pumpenanschluss kann somit je nach Betriebszustand der Pumpe sowohl Eingang, d.h. Sauganschluss, als auch Ausgang, d.h. Druckanschluss sein. Alle von der Pumpe abgehenden Leitungen können dann je nach Betriebszustand Druckleitung oder Saugleitung sein. Die Abgänge bzw. Zugänge der Pumpe sind dann jeweils über eine Brückenleitung miteinander verbunden, wobei in den Brückenleitungen ein Bypass-Schaltventil angeordnet ist, das in einer ersten Schaltstellung die jeweilige Brückenleitung freigibt und in einer zweiten Schaltstellung blockiert.

## Patentansprüche

1. Hydraulisches Stabilisierungssystem für ein Fahrwerk eines Kraftfahrzeugs, aufweisend zumindest einen Aktuator (2, 3), eine Richtungsventileinrichtung (5) zur Ansteuerung des Aktuators (2, 3) und eine hydraulische Energieversorgungseinrichtung (9), wobei die Energieversorgungseinrichtung (9), die Richtungsventileinrichtung (5) und der Aktuator (2, 3) hydraulisch in Verbindung stehen und die hydraulische Energieversorgungseinrichtung (9) zumindest eine als Flügelpumpe, insbesondere als Flügelzellenpumpe ausgebildete Pumpe (20, 20a, 20b) aufweist,
**dadurch gekennzeichnet, dass** die Pumpe (20, 20a, 20b) eine Druck- und/oder Volumen-regelbare Flügelpumpe ist, wozu ein Druck- und/oder Volumengeregelter Ausgang (50) der Pumpe (20) über eine Steuerleitung (51) mit einer von der Pumpe (10) versorgten Druckleitung (8) verbunden ist.

2. Hydraulisches Stabilisierungssystem nach Anspruch 1,
**dadurch gekennzeichnet, dass** die Energieversorgungseinrichtung (9) als Speicher-Lade-Einheit ausgebildet und mit einer Druck- und/oder Volumenspeichereinrichtung (46) versehen ist.

3. Hydraulisches Stabilisierungssystem nach Anspruch 1 oder 2,
**dadurch gekennzeichnet, dass** die Energieversorgungseinrichtung (9) ein vorgespannter, geschlossener Hydraulikkreis ohne Vorratsbehälter ist.

4. Hydraulisches Stabilisierungssystem nach einem der vorangegangenen Ansprüche, **dadurch gekennzeichnet, dass** in einer von der Energieversorgungseinrichtung (9) wegführenden Druckleitung (8, 8') ein Kugelrückschlagventil (45) vorgesehen ist.

5. Hydraulisches Stabilisierungssystem nach einem oder mehreren der vorangegangenen Ansprüche, **dadurch gekennzeichnet, dass** in der Druckleitung (8, 8') dem Kugelventil (45) nachgeordnet ein Sicherheitsschaltventil (60) vorgesehen ist.

6. Hydraulisches Stabilisierungssystem nach einem oder mehreren der vorangegangenen Ansprüche, **dadurch gekennzeichnet, dass** ein Differenzdrucksensor (47) mit dem Druck- und/oder Volumenspeicherelement (46) in Verbindung steht.

## Claims

1. An hydraulic stabilising system for a chassis of a motor vehicle, having at least an actuator (2, 3), a directional valve device (5) for activating the actuator (2, 3) and a hydraulic energy supply device (9), wherein the energy supply device (9), the directional valve device (5) and the actuator (2, 3) are hydraulically connected and the hydraulic energy supply device (9) has at least a pump (20, 20a, 20b) configured as a semi-rotary pump, more especially as a vane pump, **characterised in that** the pump (20, 20a, 20b) is a pressure-controllable and/or volume-controllable semi-rotary pump, for which purpose a pressure-controlled and/or volume-controlled outlet (50) of the pump (20) is connected to a pressure line (8) supplied by the pump (10) via a control line (51).

2. An hydraulic stabilising system according to claim 1, **characterised in that** the energy supply device (9) is configured as a storage/charging unit and is provided with a pressure and/or volume storage device (46).

3. An hydraulic stabilising system according to claim 1 or 2, **characterised in that** the energy supply device (9) is a pre-stressed, closed hydraulic circuit without a storage container.

4. An hydraulic stabilising system according to any one of the preceding claims, **characterised in that** ball check valve (45) is provided in a pressure line (8, 8') leading away from the energy supply device (9).

5. An hydraulic stabilising system according to one or more of the preceding claims, **characterised in that** a safety control valve (60) is provided downstream from the ball valve (45) in the pressure line (8, 8').

6. An hydraulic stabilising system according to one or more of the preceding claims, **characterised in that** a differential pressure sensor (47) is connected to the pressure and/or volume storage element (46).

## Revendications

1. Système de stabilisation hydraulique pour un châssis d'un véhicule automobile, présentant au moins un actionneur (2, 3), un dispositif de soupape de direction (5) pour commander l'actionneur (2, 3) et un dispositif d'alimentation en énergie hydraulique (9), le dispositif d'alimentation en énergie (9), le dispositif de soupape de direction (5) et l'actionneur (2, 3) étant connectés hydrauliquement et le dispositif d'alimentation en énergie hydraulique (9) présentant au moins une pompe (20, 20a, 20b) rotative à ailettes, notamment une pompe à cellules semi-rotative,
**caractérisé en ce que**
la pompe (20, 20a, 20b) est une pompe rotative à ailettes réglable en pression et/ou en volume, une sortie (50) réglée en pression et/ou en volume de la pompe (20) étant reliée à une conduite sous pression (8) alimentée par la pompe (10).

2. Système de stabilisation hydraulique selon la revendication 1,
**caractérisé en ce que**
le dispositif d'alimentation en énergie (9) est un module d'accumulation-chargement pourvu d'un dispositif d'accumulation de pression et/ ou de volume (46).

3. Système de stabilisation hydraulique selon la revendication 1 ou 2,
**caractérisé en ce que**
le dispositif d'alimentation en énergie (9) est un circuit hydraulique fermé, sans réservoir de stockage.

4. Système de stabilisation hydraulique selon l'une quelconque des revendications précédentes,
**caractérisé par**
une soupape d'arrêt à bille (45) dans une conduite sous pression (8, 8') détournée du dispositif d'alimentation en énergie (9).

5. Système de stabilisation hydraulique selon l'une quelconque ou plusieurs des revendications précédentes,
**caractérisé par**
une soupape de sûreté (60) dans la conduite sous pression (8, 8'), en aval de la soupape à bille (45).

6. Système de stabilisation hydraulique selon l'une quelconque ou plusieurs des revendications précédentes,
**caractérisé par**
un capteur de pression différentielle (47) connecté à l'élément d'accumulation de pression et/ou de volume (46).
